# EUROPÄISCHE PATENTANMELDUNG

(11) **EP 2 037 642 A1**
(43) Veröffentlichungstag der Anmeldung: **18.03.2009**
(21) Anmeldenummer: 07116271.3
(22) Anmeldetag: 12.09.2007
(51) Int. Cl.: H04L 12/58

(54) **Verfahren und Kommunikationssystem zur Übertragung von E-Mails über ein IP-Netzwerk**

(71) Anmelder: Schmid, Maria-Cécile, 6020 Emmenbrücke (CH)
(72) Erfinder: Schmid, Maria-Cécile, 6020 Emmenbrücke (CH)
(74) Vertreter: Rutz & Partner

(57) **Zusammenfassung**

Das Verfahren dient Der Übertragung von E-Mails über ein IP-Netzwerk (NW1), wie das Internet. Dabei wird ein Sendeprozess verwendet, anhand dessen ein E-Mail erstellt und übertragen wird, dessen Quell- und Zieladressen einen lokalen Teil und einen globalen Teil aufweisen, die durch ein standardisiertes Zeichen, wie das Zeichen @ miteinander verbunden werden. Erfindungsgemäss wird in den lokalen Teil der vorzugsweise innerhalb des Headers des E-Mails transportierten Zieladresse und/oder in den lokalen Teil der vorzugsweise innerhalb des Headers des E-Mails transportierten Quelladresse die Telefonnummer des Adressaten bzw. des Absenders aufgenommen. Durch die Verwendung von Telefonnummern in den Quell- und/oder Zieladressen der E-Mails gelingt es, gefälschte E-Mails in einfacher Weise und mit hoher Zuverlässigkeit zu erkennen. Ferner wird es möglich, die noch nicht bekannten E-Mail-Adressen von Empfängern in einfacher Weise zu erzeugen.

## Beschreibung

Die Erfindung betrifft ein Verfahren und ein Kommunikationssystem zur Übertragung von E-Mails über wenigstens ein IP-Netzwerk, wie das Internet, nach dem Oberbegriff des Patentanspruchs 1 bzw. 9.

Gemäss [1], Andrew S. Tanenbaum, Computer-Netzwerke, 3. Auflage, Prentice Hall Verlag 1998, Seite 52 werden Nachrichten mittels Sende- und Empfangsprozessen über hierarchisch strukturierte Netzwerke übertragen, indem die Dienste mehrerer Protokollschichten genutzt werden, wie sie nachfolgend kurz beschrieben werden.

Die Bitübertragungsschicht (Physical Layer) dient der Übertragung von rohen Bits über einen Kommunikationskanal. Die Aufgabe der Sicherungsschicht (Data Link Layer) ist es, eine rohe Übertragungseinrichtung in eine Leitung zu verwandeln, die sich der Vermittlungsschicht frei von unerkannten Übertragungsfehlern darstellt. Die Vermittlungsschicht (Network Layer) dient der Auswahl der Transportwege, die in statischen Tabellen festgelegt sind. Die Transportschicht (Transport Layer) übernimmt Daten von der nächst höheren Sitzungsschicht und zerlegt diese sendeseitig, sofern notwendig, und setzt sie empfangsseitig wieder zusammen. Die Sitzungsschicht (Session Layer) ermöglicht es Benutzern, an verschiedenen Maschinen, Sitzungen untereinander aufzubauen. Die Darstellungsschicht (Presentation Layer) setzt die systemabhängige Darstellung der Daten (zum Beispiel ASCII) in eine unabhängige Form um und ermöglicht somit den syntaktisch korrekten Datenaustausch zwischen unterschiedlichen Systemen. Die Verarbeitungsschicht (Application Layer) ist die oberste der sieben hierarchischen Schichten. Sie stellt den Anwendungen eine Vielzahl an Funktionalitäten zur Verfügung (zum Beispiel Datenübertragung, E-Mail, Virtual Terminal, Remote login etc.).

Die E-Mail-Technologie ist beispielsweise in [1], Kapitel 7.4 oder in [2], http://de.wikipedia.org/wiki/E-Mail beschrieben.

Der E-Mail-Dienst, der in RFC (Request for Comments) 2822 spezifiziert ist, wird - noch vor dem World Wide Web - als wichtigster und meistgenutzter Dienst des Internets angesehen. Allerdings ist seit ca. 2002 über die Hälfte des weltweiten E-Mail-Aufkommens auf Spam zurückzuführen.

Der Standard RFC 2822 spezifiziert eine Syntax für Textmeldungen, die zwischen Computeranwendern innerhalb des Bereichs "elektronische Post" ausgetauscht werden.

Danach sind E-Mails, die nur aus Textzeichen (7-Bit ASCII-Zeichen) bestehen, intern in zwei Teile geteilt, nämlich den Header mit Kopfzeilen und den Body mit dem eigentlichen Inhalt der Nachricht.

Die als Header bezeichneten Kopfzeilen einer E-Mail geben Auskunft über den Weg, den ein E-Mail genommen hat, und bieten Hinweise auf Absender, Empfänger, Datum der Erstellung und Stationen der Übermittlung.

Der Body eines E-Mails ist durch eine Leerzeile vom Header getrennt und enthält die zu übertragenden Informationen in einem oder mehreren Teilen.

Ein E-Mail darf gemäss RFC 2822 Abschnitt 2.3 nur Zeichen des 7-Bit ASCII-Zeichensatzes enthalten. Sollen andere Zeichen, wie z.B. deutsche Umlaute, oder Daten, wie zum Beispiel Bilder, übertragen werden, werden diese zuvor automatisch passend kodiert.

Ein wesentliches Element eines E-Mails ist die E-Mail-Adresse, also die Angabe, welche den Empfänger einer E-Mail eindeutig bezeichnet und damit eine Zustellung an diesen Empfänger ermöglicht. Eine E-Mail-Adresse, wie sie für den Transport mittels SMTP-Protokoll im Internet verwendet wird, besteht aus zwei Teilen: einem lokalen Teil (local-part) und einem globalen Teil (domain-part). Beide Teile werden durch das Zeichen @ miteinander verbunden.

Der Anwender erhält dadurch zahllose Möglichkeiten zur Wahl seiner E-Mail-Adresse. Oft besteht der lokale Teil aus Name und Vorname und einem dazwischen vorgesehenen Zeichen. Zusätzliche Möglichkeiten resultieren aus der Wahl des globalen Teils.

Aufgrund der Vielfalt von Möglichkeiten resultieren enorme Probleme bei der Verwaltung des E-Mail-Verkehrs. Aus der Sicht des Absenders sind Fehleradressierungen zu vermeiden. Oft wird der lokale Teil und/oder der globale Teil einer E-Mail-Adresse nicht korrekt angegeben. Bei den globalen Teilen ist es möglich, dass ein oder mehrere Labels des Domain-Namens falsch geschrieben werden.

Noch schwieriger ist die Handhabung eintreffender E-Mails. Der Empfänger muss die eintreffenden E-Mails prüfen und ordnen, um unerwünschte E-Mails blockieren oder identifizieren und löschen zu können. Dabei wird der Anwender durch Programme unterstützt, die in der Lage sind, unerwünschte E-Mails mit einer hohen Wahrscheinlichkeit zu erkennen. Fallweise treten jedoch Fehlzuordnungen auf, die es dem Anmelder verwehren, generell auf diese Programme zu vertrauen. Dabei ist auch zu beachten, dass die E-Mail-Adressen der Anwender bei einer Änderung des persönlich beauftragten Providers oder des Arbeitgebers zumeist ändern. Es ist daher oft nicht leicht, oder gar unmöglich, die korrekte E-Mail-Adresse eines Adressdaten innerhalb von nützlicher Frist zu finden.

Erschwert wird dieser Sachverhalt durch E-Mails, die eine vertrauenswürdige Quelladresse aufweisen, die jedoch gefälscht ist. Zur Bekämpfung gefälschter E-Mails wurde bereits vorgeschlagen, im E-Mail-Verkehr zusätzliche Identifikatoren zu verwenden. Fehlt einem E-Mail sodann dieser Identifikator, der bei einem Dienstleister oder dem Netzbetreiber registriert ist, so wird das E-Mail als Fälschung erkannt und gelöscht. Nachteilig bei diesem Verfahren ist einerseits, dass ein zusätzlicher eindeutiger Identifikator generiert und verwaltet werden muss und dass dieser beispielsweise im Header des E-Mails transportierte Identifikator nicht ebenfalls gefälscht wird.

Weiterhin ist zu beachten, dass der Anwender, zusätzlich zur Verwaltung von E-Mail-Adressen, auch mit der Verwaltung weitere Adressdaten, wie Postadressen und Telefonnummern, seiner Kontakte belastet ist.

Der vorliegenden Erfindung liegt daher die Aufgabe zugrunde, ein verbessertes Verfahren und ein verbessertes Kommunikationssystem zur Übertragung von E-Mails über ein IP-Netzwerk, wie das Internet, zu schaffen.

Insbesondere sind ein Verfahren und ein Kommunikationssystem zu schaffen, die es einem Absender erlauben, E-Mails mit minimalem Aufwand und hoher Zuverlässigkeit an einen Empfänger zu senden.

Das Verfahren soll es dem Anwender zudem erlauben, die Adressdaten seiner Kontakte einfach zu verwalten und unerwünschte E-Mails mit minimalem Aufwand und hoher Zuverlässigkeit zu identifizieren.

Den Betreibern des genutzten Netzwerks sowie Anbietern von Dienstleistungen soll das Verfahren erlauben, unerwünschten E-Mail-Verkehr mit minimalem Aufwand und hoher Zuverlässigkeit zu erfassen.

Diese Aufgabe wird mit einem Verfahren und einem Kommunikationssystem gelöst, welche die in Anspruch 1 bzw. 9 angegebenen Merkmale aufweisen. Vorteilhafte Ausgestaltungen der Erfindung sind in weiteren Ansprüchen angegeben.

Das Verfahren dient der Übertragung von E-Mails über ein IP-Netzwerk, wie das Internet. Dabei wird ein Sendeprozess verwendet, anhand dessen ein E-Mail erstellt und übertragen wird, dessen Quell- und Zieladressen einen lokalen Teil und einen globalen Teil aufweisen, die durch ein standardisiertes Zeichen, wie das Zeichen @ miteinander verbunden werden.

Erfindungsgemäss wird in den lokalen Teil der vorzugsweise innerhalb des Headers des E-Mails transportierten Zieladresse und/oder in den lokalen Teil der vorzugsweise innerhalb des Headers des E-Mails transportierten Quelladresse die Telefonnummer des Adressaten bzw. des Absenders aufgenommen. Durch die Verwendung von Telefonnummern in den Quell- und/oder Zieladressen der E-Mails gelingt es, gefälschte E-Mails in einfacher Weise und mit hoher Zuverlässigkeit zu erkennen. Ferner wird es möglich, die noch nicht bekannten E-Mail-Adressen von Empfängern in einfacher Weise zu erzeugen.

Bestandteil der Zieladresse und vorzugsweise auch der Quelladresse ist daher die Telefonnummer, normalerweise eine der ITU-T Empfehlung Nr. E.164 entsprechende Nummer, des Absenders bzw. des Empfängers gewählt. Besonders vorteilhaft ist es, wenn sowohl Absender, als auch Empfänger die Telefonnummer als Bestandteil ihrer E-Mail-Adressen verwenden.

In den globalen Teil der Zieladresse und/oder der Quelladresse wird vorzugsweise ein Zeichen mit einem Hinweis auf den verwendeten Inhalt des lokalen Teils aufgenommen. Beispielsweise wird ein leicht merkbarer, von einem Dienstleister zur Verfügung gestellter Domänenname, wie PHONEBOX.CH, verwendet, der stets in Kombination mit Telefonnummern verwendet wird. Ein Anwender kann daher die Rufnummer des Adressaten in den lokalen Teil und den üblicherweise verwendeten Domänennamen in den globalen Teil der Zieladresse einfügen. Somit gelingt es den Anwendern, die noch unbekannten Adressen ihrer Kontakte leicht zu erstellen. Sofern sie die Telefonnummern lokal gespeichert haben oder über das Internet auf diese zugreifen können, so können die Zieladressen problemlos erstellt werden. Dabei genügt es, nur die Telefonnummern lokal in einem Datenverwaltungsprogramm abzuspeichern. Durch die Markierung eines Feldes wird vorzugsweise festgehalten, dass die Telefonnummer auch für die Erzeugung der E-Mail-Adresse verwendet wird. Sofern das genannte Feld markiert ist, entnimmt das entsprechend ausgestaltete E-Mail-Programm die Telefonnummer (zum Beispiel: 0041441234567) des Adressaten und verknüpft diese mittels des @-Zeichens mit dem dafür vorgesehenen globalen Teil der E-Mail-Adresse (zum Beispiel: 0041441234567@PHONEBOX.CH) und fügt diese in den Header des E-Mails ein. Ferner entnimmt das E-Mail-Programm die E-Mail-Adresse des Absenders (zum Beispiel: 0041447654321@PHONEBOX.CH) und fügt diese ebenfalls in den Header des E-Mails ein. Der Anwender kann auch auf gut Glück die Telefonnummer eines Adressaten in die E-Mail-Adresse einfügen uns das E-Mail versenden. Sofern der Adressat seine Telefonnummer nicht als Bestandteil der E-Mail-Adresse verwendet, wird dies vorzugsweise durch einen Dienstleister oder durch den Netzbetreiber, der den E-Mail-Verkehr prüft, anhand einer Telefonistin erkannt und dem Absender gemeldet.

Das erfindungsgemässe Verfahren hat zahlreiche Vorteile. Wie oben beschrieben wurde, kann die E-Mail-Adresse eines Adressaten leicht ermittelt werden. Die Verwaltung der Adressen der Adressaten kann vereinfacht werden. Die Adressdaten von Kontakten können von einem privaten oder öffentlich zugänglichen Telefonverzeichnis geladen werden. Vorzugsweise ist in diesen Datenbanken oder Telefonverzeichnissen ein Hinweis (ja/nein) enthalten, der anzeigt, ob der registrierte Teilnehmer seine Telefonnummer auch zur Bildung der E-Mail-Adresse verwendet. Mit dem Laden der Telefonnummer sowie dem entsprechenden Hinweis, sofern diese positiv ist, verfügt der Absender daher nicht nur über die Telefonnummer, sondern auch über die E-Mail-Adresse seiner Adressaten.

Die Verwendung der Telefonnummer zur Bildung der E-Mail-Adresse ergibt weitere Vorteile. Entsprechend aufgebaute E-Mails können in einfacher Weise eindeutig einem Teilnehmer zugeordnet werden, der bereits in einem öffentlichen Register eingetragen ist. Der Inhalt des lokalen Teils der Zieladresse und/oder der Quelladresse wird daher vorzugsweise als Identifikator verwendet, um unerwünschte und/oder gefälschte E-Mails zu identifizieren und entsprechend einer Regel zu behandeln, gegebenenfalls zu löschen oder einer vertieften Prüfung zu unterwerfen, gegebenenfalls auch, um eine SPAM-Quelle zu ermitteln. Sofern die E-Mail-Adressen des Absenders und des Adressaten der geprüften E-Mails mit diesem Identifikator versehen sind, und diese als gültig erkannt werden, kann bereits festgestellt werden, dass diese geprüften E-Mails mit hoher Wahrscheinlichkeit echte und vom Adressdaten erwünschte E-Mails sind. E-Mails, bei denen ein Spammer oder Fälscher einen gültigen globalen Teil mit einem zufällig gewählten lokalen Teil kombiniert, können hingegen bereits mit hoher Wahrscheinlichkeit als Fälschungen erkannt werden. Da gefälschte E-Mails dieser Art einen hohen Anteil des E-Mail-Verkehrs darstellen, kann anhand der erfindungsgemässen Lösung bereits mit geringem Aufwand eine deutliche Qualitätsverbesserung des Kommunikationssystems erzielt werden, welches beispielsweise durch das Internet und/oder ein Intranet und damit verbundene Datenendgeräte gebildet wird. Von besonderer Bedeutung ist dabei der Informationsgehalt der Telefonnummern, die Segmente aufweisen, welche das Land, die Region und die Ortschaft des Inhabers und gegebenenfalls auch den Netzbetreiber bezeichnen.

Die Prüfung kann empfangsseitig und/oder innerhalb des Übertragungsweges, gegebenenfalls durch das Datenendgerät eines Dienstleisters oder des Netzbetreibers erfolgen, indem der Inhalt des lokalen Teils der Zieladresse und/oder der Quelladresse mit gegebenenfalls eingeschränkten Daten einer lokalen und/oder globalen Datenbank verglichen wird, in der gültige Telefonnummern abgespeichert sind. Die Prüfung innerhalb des Übertragungsweges ist besonders vorteilhaft, da dadurch ein wesentlicher Teil des unerwünschten E-Mail-Verkehrs beseitigt und dadurch der Teilnehmer entlastet wird.

Sofern der Inhalt des lokalen Teils der Zieladresse und/oder der Quelladresse nicht mit Daten der Datenbank übereinstimmt, wird das betreffende E-Mail entsprechend einer ersten Regel behandelt, vorzugsweise gelöscht. Die Daten des Telefonverzeichnisses oder der entsprechenden lokalen oder globalen Datenbank können entweder durch die Teilnehmer und/oder den Dienstleister oder Netzbetreiber auch beschränkt werden, so dass E-Mails mit einer Absenderadresse, deren Telefonnummer nicht zum Ursprungsort des E-Mails korrespondiert, herausgefiltert und gesondert behandelt, beispielsweise einer vertieften Prüfung unterworfen werden können. Beispielsweise können die Daten auf nationale oder regionale Bereiche beschränkt werden. Ein Teilnehmer kann beispielsweise festlegen, dass er nur E-Mails aus Deutschland oder der Schweiz empfängt, wodurch der Zufluss gefälschter E-Mails bereits um Grössenordnungen reduziert wird.

In einer vorzugsweisen Ausgestaltung werden E-Mails, bei denen der lokale Teil der Zieladresse und/oder der Quelladresse mit Daten der lokalen und/oder der globalen Datenbank, jedoch nicht mit den beschränkten Daten der lokalen und/oder der globalen Datenbank übereinstimmen, entsprechend einer zweiten Regel behandelt, vorzugsweise markiert und weitergeleitet. Dadurch kann gesichert werden, dass der Teilnehmer auch ungefälschte E-Mails erhält, die nicht in dem von ihm ausgewählten Datenbereich liegen. Jedem Bereich, den der Teilnehmer, der Dienstleister oder der Netzbetreiber auswählt, kann individuell eine Regel zugeordnet werden, entsprechend der das E-Mail behandelt wird.

Durch die beschriebenen Massnahmen wird das Spam-Problem natürlich nicht vollständig beseitigt, allerdings signifikant entschärft, da ein hoher Anteil gefälschter E-Mails mit einfachen Massnahmen und hoher Treffer-Wahrscheinlichkeit identifiziert werden kann. Dabei können falsch-positiv-Resultate (false positives) vollständig vermieden werden. Das heisst, wenn die Telefonnummer nicht registriert ist, ist eine Fehlermeldung immer zutreffend. Durch eine Rückmeldung an den Absender kann dieser zudem veranlasst werden, seine Telefonnummer korrekt registrieren zu lassen. Das Auftreten von falsch-negativ-Resultaten kann hingegen durch zusätzliche Prüfungen stark reduziert werden. Das heisst, auch wenn ein gefälschtes E-Mail mit korrekten Telefonnummern versehen wäre könnte dieses noch mittels weiterer Prüfungen erkannt werden.

Aufgrund der Beseitigung gefälschter E-Mails resultieren freie Kapazitäten im Kommunikationssystem sowie signifikante Entlastungen seitens der Benutzer und Betreiber des Netzwerks, die von hohem Wert sind beziehungsweise zu einer wesentlichen Reduktion der Wartungsaufwendungen und Investitionen führen.

Nachfolgend wird die Erfindung anhand einer Zeichnung näher erläutert. Dabei zeigt:

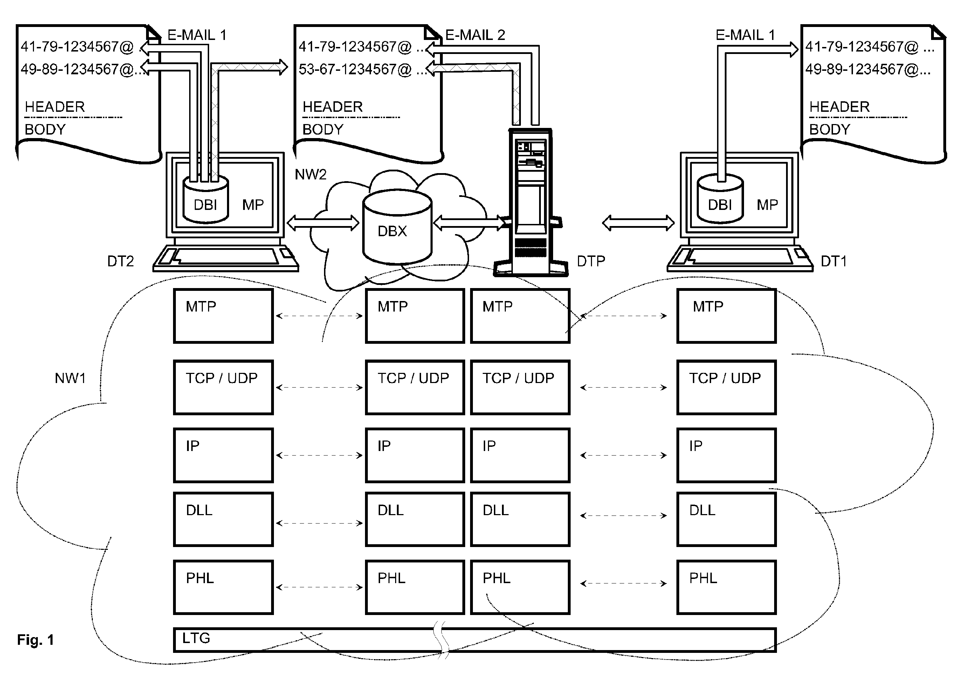

- Fig. 1: ein erfindungsgemässes Kommunikationssystem mit E- Mail-Programmen MP versehenen Datenendgeräten DT1, DT2, die an ein Netzwerk NW1 angeschlossen sind, welches die Internetprotokolle verwendet.

Figur 1 zeigt die eingangs erläuterte Protokollarchitektur eines Netzwerks NW1, welches in der Vermittlungsschicht und in der Transportschicht die Internetprotokolle IP bzw. TCP/UDP verwendet, die beispielsweise in [3], Douglas E. Comer, INTERNETWORKING WITH TCP/IP, PRINCIPLES, PROTOCOLS, AND ARCHITECTURES, 4th EDITION, Prentice Hall 2000, Seiten 183-195 beschrieben sind.

Die Schichten der Internetprotokolle sind auf eine Sicherungsschicht DLL (Data Link Layer) und eine Bitübertragungsschicht PHL (Physical Layer) gestützt, mittels der Daten über eine physikalische Leitung LTG übertragen werden. In der Verarbeitungsschicht ist ein Protokoll (Message Transfer Protokoll MTP) vorgesehen, mittels dessen Meldungen gesendet und empfangen werden, die in den Datenendgeräten DT1, DT2 in Form von E-Mail-Nachrichten erstellt werden. Der Aufbau dieser E-Mail-Nachrichten bzw. E-Mails wurde eingangs erläutert.

In Figur 1 ist gezeigt, dass in den Header eines mittels des ersten Datenendgeräts DT1 erstellten ersten E-Mails 1 die aus einer lokalen Datenbank DBI entnommene E-Mail-Adresse 41-79-1234567@ ... des zweiten Datenendgeräts DT2 eingefügt wird, welche im lokalen Teil die gemäss der ITU-T Spezifikation Nr. E.164 aufgebaute Telefonnummer 41-79-1234567 des Adressaten bzw. des Inhabers des zweiten Datenendgeräts DT2 enthält.

Aus der lokalen Datenbank DBI oder einer globalen Datenbank DBX, auf die in der in Figur 1 gezeigten Ausgestaltung der Erfindung über ein weiteres Netzwerk NW2 zugegriffen wird, kann ferner auch nur die Telefonnummer 41-79-1234567 des Adressaten entnommen und mittels des E-Mail Programms MP mit dem globalen Teil der E-Mail-Adresse @ ... verknüpft werden. Der Absender braucht daher nur zu wissen, dass der Adressat eine auf der Telefonnummer basierte E-Mail-Adresse verwendet. In vorzugsweisen Ausgestaltungen der Erfindung wird diese Information, beispielsweise durch das Setzen eines Bits bzw. durch das Ankreuzen eines Feldes, in eine öffentlich zugängliche Telefonliste aufgenommen.

In den Header des ersten E-Mails 1 wird ferner die E-Mail-Adresse 49-89-1234567@ ... des ersten Datenendgeräts DT1 eingefügt, welche im lokalen Teil die gemäss der ITU-T Spezifikation Nr. E.164 aufgebaute Telefonnummer 49-89-1234567 des Absenders bzw. des Inhabers des ersten Datenendgeräts DT1 enthält.

Gemäss [1], Seite 695 kann das erstellte E-Mail nun über das Internet versandt werden, indem beispielsweise das erste Datenendgerät DT1 (Quellmaschine) eine TCP-Verbindung zu einem Port des zweiten Datenendgeräts DT2 (Zielmaschine) aufbaut. Das Abtasten dieses Ports besorgte ein E-Mail-Deamon (Softwareprozess), der vorzugsweise das SMTP-Protokoll (Simple Mail Transfer Protocol) verwendet. Der E-Mail-Deamon nimmt ankommende Verbindungen an und kopiert Nachrichten in die entsprechenden Mailboxen. Kann eine Nachricht nicht zugestellt werden, wird ein Fehlerbericht mit dem ersten Teil der unzustellbaren Nachricht ausgegeben und an den Absender zurückgeschickt.

Nach dem Aufbau der TCP-Verbindung zum entsprechenden Port wartet die sendende Maschine (Client), bis die empfangende Maschine (Server) zuerst mit der Kommunikation beginnt. Der Server beginnt durch Aussenden einer Textzeile, durch die er sich identifiziert und mitteilt, ob er das E-Mail annehmen kann. Andernfalls löst der Client die Verbindung auf und versucht es später noch einmal.

Ist der Server bereit, das E-Mail entgegenzunehmen, kündigt der Client an, von wem das E-Mail kommt (Quelladresse) und an wen es gerichtet ist (Zieladresse). Existiert das angegebene Empfängerziel, gibt der Server dem Client das Startzeichen zu senden. Dann sendet der Client die Nachricht, und der Server bestätigt sie. Wurden alle Nachrichten ausgetauscht, wird die Verbindung abgebaut.

Gemäss [1], Seite 697 funktioniert der E-Mail-Verkehr mit dem SMTP-Protokoll am besten, wenn Sender und Empfänger am Internet hängen und beide TCP-Verbindungen unterstützen. Viele Maschinen sind aber nicht am Internet möchten dennoch E-Mail mit Internet Stellen austauschen. Beispielsweise sind viele Unternehmen absichtlich aus Sicherheitsgründen nicht am Internet angeschlossen einige Unternehmen schauten sich vor dem Internet durch den Aufbau von Firewalls ab. In diesem Fall können E-Mail-Gateways eingesetzt werden, deren Prozesse in Verarbeitungsschicht arbeiten und die E-Mail-Nachrichten in einem Nachrichtenpuffer ablegen. Ebenso können die in Figur 1 gezeigten Maschinen DTP von Providern und Netzbetreibern, E-Mail-Nachrichten in einem Nachrichtenpuffer zwischenspeichern.

Die Prüfung der E-Mails kann durch den genannten E-Mail-Deamon erfolgen, der die E-Mails in die Mailboxen oder den Nachrichtenpuffer transferiert und der dazu mit den notwendigen Prüffunktionalitäten erweitert wird. Selbstverständlich kann auch ein Prüf-Deamon verwendet werden, der die beschriebenen Prüfungen durchführt und mit dem E-Mail-Deamon zusammenarbeitet.

Der vorzugsweise in das E-Mail-Programm integrierte Prüf-Deamon entnimmt daher den Inhalt des lokalen Teils der Zieladresse und/oder den Inhalt des lokalen Teils der Quelladresse und verwendet diese als Identifikatoren. Die ermittelten Identifikatoren werden mit den gegebenenfalls eingeschränkten Daten der internen oder externen Teilnehmerverzeichnisse oder Telefonlisten verglichen, um festzustellen, ob das vorlegende E-Mail gefälscht ist oder nicht. Durch die erfindungsgemässen Massnahmen reduziert sich ferner der Bedarf an so genannten White-Lists und Black-Lists, die jeweils mit relativ hohem Aufwand verwaltet werden müssen.

Die erfindungsgemässen Lösung ist nicht nur in Netzwerken mit den heute üblicherweise verwendeten Protokollen, sondern auch in zukünftigen, paketvermittelnden Netzwerken verwendbar, in denen neue Generationen der eingangs genannten Protokollarchitekturen verwendet werden.

### Literaturverzeichnis

[1] Andrew S. Tanenbaum, Computer-Netzwerke, 3. Auflage, Prentice Hall Verlag 1998
[2] http://de.wikipedia.org/wiki/E-Mail
[3] Douglas E. Comer, INTERNETWORKING with TCP/IP, PRINCIPLES, PROTOCOLS, AND ARCHITECTURES, 4th EDITION, Prentice Hall 2000

## Patentansprüche

1. Verfahren zur Übertragung von E-Mails über ein IP-Netzwerk (NW1) wie das Internet, mit der Verwendung eines Sendeprozesses, anhand dessen ein E-Mail erstellt und übertragen wird, dessen Quell- und Zieladressen einen lokalen Teil und einen globalen Teil aufweisen, die durch ein standardisiertes Zeichen, wie das Zeichen @ miteinander verbunden werden, **dadurch gekennzeichnet, dass** in den lokalen Teil der vorzugsweise innerhalb des Headers des E-Mails transportierten Zieladresse und/oder in den lokalen Teil der vorzugsweise innerhalb des Headers des E-Mails transportierten Quelladresse die Telefonnummer des Adressaten bzw. des Absenders aufgenommen wird.

2. Verfahren nach Anspruch 1, **dadurch gekennzeichnet, dass** in den globalen Teil der Zieladresse und/oder in den globalen Teil der Quelladresse ein Zeichen mit einem Hinweis auf den verwendeten Inhalt des lokalen Teils aufgenommen wird und/oder, dass in Telefonverzeichnissen bzw. Datenbanken (DBI, DBX) ein Hinweis aufgenommen wird, der anzeigt, ob der registrierte Teilnehmer seine Telefonnummer zur Bildung der E-Mail-Adresse verwendet.

3. Verfahren nach Anspruch 1 oder 2, **dadurch gekennzeichnet, dass** der Inhalt des lokalen Teils der Zieladresse und/oder der Inhalt der Quelladresse als Identifikator verwendet wird, um unerwünschte und/oder gefälschte E-Mails zu identifizieren und entsprechend einer Regel zu behandeln.

4. Verfahren nach Anspruch 3, **dadurch gekennzeichnet, dass** empfangsseitig oder innerhalb des Übertragungsweges, gegebenenfalls durch das Datenendgerät (DTP) eines Dienstleisters, der Inhalt des lokalen Teils der vielen Adresse und/oder der Inhalt des lokalen Teils der Quelladresse mit gegebenenfalls eingeschränkten Daten einer lokalen und/oder globalen Datenbank (DBI, DBX) verglichen wird, in der gültige Telefonnummern abgespeichert sind.

5. Verfahren nach Anspruch 4, **dadurch gekennzeichnet, dass** das E-Mail im Fall fehlender Übereinstimmung des Inhalts des lokalen Teils der Zieladresse und/oder der Quelladresse mit den Daten der Datenbank (DBI, DBX) entsprechend einer ersten Regel behandelt, vorzugsweise gelöscht wird.

6. Verfahren nach Anspruch 4 oder 5, **dadurch gekennzeichnet, dass** die für den Vergleich verwendeten Daten der lokalen und/oder der globalen Datenbank (DBI, DBX) auf regionale oder nationale Bereiche und/oder vom Anwender oder Dienstleister bestätigte Adressen beschränkt werden.

7. Verfahren nach Anspruch 4, 5 oder 6, **dadurch gekennzeichnet, dass** E-Mails, bei denen der lokale Teil der Zieladresse und/oder der Quelladresse mit Daten der lokalen und/oder der globalen Datenbank, jedoch nicht mit den beschränkten Daten der lokalen und/oder der globalen Datenbank übereinstimmen, entsprechend einer zweiten Regel behandelt, vorzugsweise markiert und weitergeleitet werden.

8. Verfahren nach Anspruch 4, 5, 6 oder 7, **dadurch gekennzeichnet, dass** durch Dienstleister oder Netzbetreiber aus der im E-Mail enthaltenen Quelladresse geographische Informationen gewonnen werden, die mit dem Standort des Absenders verglichen werden, wonach das E-Mail bei fehlender Übereinstimmung entsprechend einer dritten Regel behandelt, vorzugsweise einer gesonderten Prüfung unterzogen werden.

9. Kommunikationssystem für die Durchführung des Verfahrens nach Anspruch 1 mit an ein IP-Netzwerk wie das Internet angeschlossenen Datenendgeräten (DT1, DT2), die ein Mailprogramm (MP) aufweisen, das für die Erstellung und den Versand sowie den Empfang und die Auswertung von E-Mails geeignet ist, deren Quell- und Zieladressen einen lokalen Teil und einen globalen Teil aufweisen, die durch ein standardisiertes Zeichen, wie das Zeichen @ miteinander verbunden werden, **dadurch gekennzeichnet, dass** das Mailprogramm (MP) zur Abfrage von Daten aus der lokalen und/oder der globalen Datenbank (DBI, DBX) geeignet ist, in der gültige Telefonnummern abgespeichert sind und dass das Mailprogramm (MP) dazu vorgesehen ist, den lokalen Teil der vorzugsweise innerhalb des Headers des E-Mails transportierten Quelladresse und/oder Zieladresse, nämlich die Telefonnummer des Absenders bzw. Adressaten, mit den aus der Datenbank (DBI, DBX) geladenen Daten zu vergleichen und im Falle fehlender Übereinstimmung eine Regel durchzuführen, vorzugsweise das E-Mail einer erweiterten Prüfung zu unterwerfen oder zu löschen.

10. Kommunikationssystem nach Anspruch 8, **dadurch gekennzeichnet, dass** innerhalb des Übertragungsweges, zwischen den Datenendgeräten (DT1, DT2) wenigstens ein Server (DTP) eines Dienstleisters oder des Netzbetreibers vorgesehen ist, der ein Prüfprogramm (PP) aufweist, das zur Abfrage von Daten aus der lokalen und/oder der globalen Datenbank (DBI, DBX) geeignet ist, in der gültige Telefonnummern abgespeichert sind und dass das Prüfprogramm (PP) dazu vorgesehen ist, den lokalen Teil der vorzugsweise innerhalb des Headers des E-Mails transportierten Quelladresse und/ oder der Zieladresse, nämlich die entsprechende Telefonnummer des Absenders bzw. Adressaten, mit den aus der Datenbank (DBI, DBX) geladenen Daten zu vergleichen und im Falle fehlender Übereinstimmung eine Regel durchzuführen, vorzugsweise das E-Mail einer erweiterten Prüfung zu unterwerfen oder zu löschen.
